Europäisches Patentamt

European Patent Office

Office européen des brevets

(11) Publication number: **0 188 048**
**A1**

# EUROPEAN PATENT APPLICATION

(21) Application number: 85301269.8

(22) Date of filing: 26.02.85

(51) Int. Cl.⁴: **F 16 K 17/10**
**F 16 K 31/124**

(30) Priority: 21.09.84 US 652953

(43) Date of publication of application:
23.07.86 Bulletin 86/30

(84) Designated Contracting States:
DE FR GB

(71) Applicant: MOOG INC.
Proner Airport
East Aurora New York 14052(US)

(72) Inventor: Czajka, Ronald J.
1794 Lafayette Drive
Alden New York 14004(US)

(74) Representative: Knott, Stephen Gilbert et al,
MATHISEN, MACARA & CO. The Coach House 6-8
Swakeleys Road
Ickenham Uxbridge Middlesex UB10 8BZ(GB)

(54) Pilot-operated valve.

(57) A pilot-operated valve (10) for controlling the supply of pressurized fluid from a suitable source (11), comprises a body (21), a movable piston-like member (18), a pilot valve element (19), and an actuator (20). The body has a passageway (96,62) therethrough which communicates a body inlet (95) with a body outlet (62-66). The passageway has a main portion extending directly between the inlet and outlet, and has a narrower pilot portion (92,93,70,68) extending between the passageway main portion and the outlet. The movable member (18) slides in the passageway main portion between a first position, at which the member (18) blocks direct flow through the main passageway portion from the inlet to the outlet, and a second position (not shown) permitting such flow. The valve element (19) is mounted in the passageway pilot portion, and is biased normally to close the passageway pilot portion. The actuator (20) is selectively operable to displace the pilot valve element away from its seat, to permit fluid to flow through the passageway pilot portion to the outlet.

Fig. 1.

## PILOT-OPERATED VALVE

This invention relates generally to the field of valves, and, more particularly, to an improved valve wherein fluid flow through a relatively-small area pilot passageway is used to control flow through a relatively-large area main passageway.

The invention provides a valve for controlling the supply of fluid from a pressurized fluid source, comprising a body having a main passageway therethrough which connects an inlet, adapted for connection to the fluid source, and an outlet; a movable member mounted in said main passageway for sealed sliding movement therealong, said member being movable between a first position preventing fluid flow from the inlet through the main passageway to the outlet, and a second position permitting said fluid flow; and characterized in that the movable member has an opening therethrough for permitting fluid pressure to equalize at opposite ends of the member; in that the body has a pilot passageway connecting a portion of the main passageway to the outlet; in that a pilot valve is mounted in the pilot passageway and biased into a closed position which closes the pilot passageway; and in that an actuator, mounted in the body, is operable to open the pilot valve to allow a secondary fluid flow through the pilot passageway; the arrangement being such that said secondary fluid flow causes said movable member to move to its second position.

In order that the invention may be better understood, a preferred embodiment of the invention will now be described, by way of example only, with reference to the accompanying schematic drawings, wherein:

Figure 1 is a fragmentary vertical sectional view of a valve embodying the invention, mounted on a "bottle" containing pressurized fluid, and showing the body, the piston-like member, the pilot element, and the actuator;

Figure 2 is a fragmentary transverse vertical sectional view taken generally on line 2-2 of Figure 1, and showing an upper portion of the valve in right end elevation, and a lower portion thereof in vertical section;

Figure 3 is an enlarged fragmentary view in greater detail of the piston-like member shown in Figure 1;

Figure 4 is an enlarged fragmentary vertical section view of the member-capturing detent, this view showing the position of the detent follower when the piston-like member is in its "first position";

Figure 5 is a view similar to Figure 4, but showing the position of the detent follower after the piston-like member has been moved to its "second position";

Figure 6 is an enlarged fragmentary detail view of the pilot valve element and the actuator shown in Figure 1, this view showing the element in its closed position;

Figure 7 is a view generally similar to Figure 6, but showing the displaced position of the actuator after the retaining pin has been pulled, and showing the pilot valve element as having moved away from its seat;

Figure 8 is a view of the valve of Figure 1, showing the position of the various parts and components before the retaining pin has been pulled; and

Figure 9 is another view generally similar to Figure 8, but showing the positions of the various parts and components after the retaining pin has been pulled.

In the description that follows, and in the drawings, like reference numerals are intended to identify the same structural elements, portions or surfaces consistently. The terms "left", "right", "up" and "down", as well as adjectival and adverbial derivatives thereof (e.g. "leftwardly", "rightwardly", etc.), refer to the orientation of the illustrated structure as a particular drawing figure faces the reader. Similarly, the terms "inwardly" and "outwardly" refer to the orientation of a surface relative to its axis of elongation.

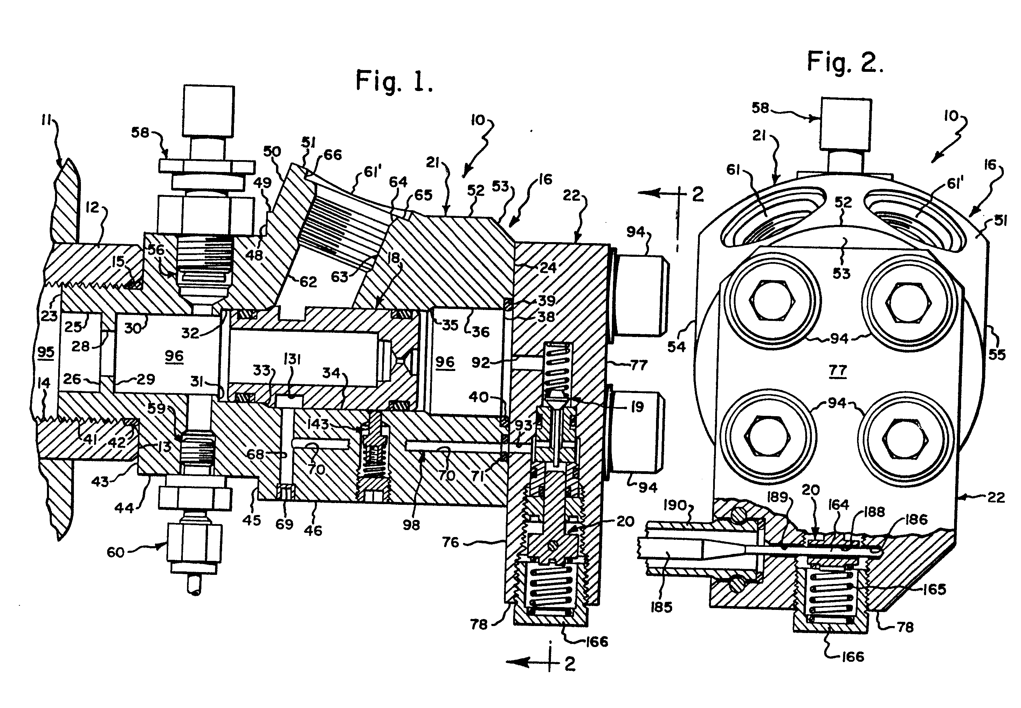

Referring now to the drawings, an improved valve 10 is adapted to be supplied with pressurized fluid, (i.e. a liquid or a gas) from a suitable source thereof. In the disclosed embodiment, this fluid source is shown as being contained within a container or "bottle", of which a fragmentary portion is generally indicated at 11 (Figs. 1, 8 and 9), mounted on the improved valve. A cylindrical collar 12 extends rightwardly from fluid-storage "bottle" 11, and terminates in an annular vertical right end face 13. The bore through this collar is internally threaded, as indicated at 14. An annular recess extends into the collar adjacent end face 13 to accommodate the presence of an O-ring 15, by which the "bottle" may be sealingly joined to the valve.

valve 10 broadly includes a body 16, a movable piston-like member 18, a pilot valve element 19, and an actuator 20.

Referring now to Figures 1 and 2, the body is shown as being of sectional construction, and has a main part 21, and a rightward end cap 22. The body main part is specially configured, and has: an annular vertical left end face 23; an annular vertical right end face 24; and a stepped axial through-bore which is sequentially bounded by (from left to right in Fig. 1) a cylindrical surface 25 extending rightwardly from left end face 23, a leftwardly-facing annular vertical surface 26, a cylindrical surface 28, a rightwardly-facing annular vertical surface 29, a cylindrical surface 30, a rightwardly-facing annular vertical surface 31, a cylindrical surface 32, a rightwardly- and inwardly-facing frusto-conical surface 33, a cylindrical surface 34, a rightwardly- and inwardly-facing frusto-conical surface 35, a cylindrical surface 36, a rightwardly-facing annular vertical surface 38, and a cylindrical surface 39 continuing rightwardly therefrom to join right end face 24. Surfaces 38,39 form an annular recess extending into main part 21 to accommodate the presence of an O-ring 40, by which the end cap may be sealed to the main body part, when joined together. The main body part 21 also has an outer surface which sequentially includes (from left to right in Fig. 1): an externally-threaded surface 41 extending rightwardly from left end face 23, a cylindrical surface 42 engaged by O-ring 15, a leftwardly-facing annular vertical surface 43, a cylindrical surface 44, a leftwardly-facing annular vertical surface 45, and an asymmetrical portion continuing rightwardly therefrom to join right end face 24. Specifically, the bottom of this asymmetrical portion a downwardly-facing planar horizontal surface 46; while the top of this portion sequentially includes (from left to right in Fig. 1) a leftwardly-facing arcuate vertical surface 48, an upwardly-facing arcuate surface 49, an upwardly- and leftwardly-facing frusto-conical surface segment 50, a spherically-segmented surface 51 (Fig. 2), a cylindrical surface segment 52, and an upwardly- and rightwardly-facing frusto-conical surface segment 53 joining right end face 24. As shown in Fig. 2 the left and right side surfaces of the body main part may be milled flat, as indicated at 54,55, respectively.

Returning now to Fig. 1, a stepped radial hole, generally indicated at 56, is provided through the body main part so as to communicate surfaces 30,44 thereof. A fitting, generally indicated at 58, is matingly received in this hole to provide a means by which the "bottle" may be refilled. Another stepped radial hole, generally indicated at 59, is provided through the body main part at a location diametrically opposite that of hole 56, so as to communicate surfaces 30,44. Another fitting, generally indicated at 60, is arranged in hole 59, and is used to indicate the pressure within the body bore by means of a suitable gauge (not shown) or pressure transducer (not shown).

Another inclined passage is provided through the body main part so as to communicate bore surface 34 with outer surface 51. This passage is somewhat V-shaped, when viewed in transverse section (Fig. 2), and converges at the lowermost apex thereof at body surface 34. Each branch diverges relative to the other to form transversely-spaced outlet opening 61,61' on surface 51. As best shown in Fig. 1, each branch passage is sequentially bounded by a cylindrical surface 62 extending upwardly and rightwardly from bore surface 34, and internally-threaded portion 63, an outwardly- and inwardly-facing frusto-conical surface 64, an upwardly- and rightwardly-facing annular surface 65, and a cylindrical surface 66 continuing upwardly and rightwardly therefrom (Fig. 1) to open onto outer surface 51 and to define outlet openings 61,61' therewith.

A hole 68 is drilled upwardly through the body main part to communicate lower surface 46 with bore surface 34. The lower end of hole 68 is closed by means of a suitable plug 69. Another horizontal hole 70 extends leftwardly from right face 24 into the body main part to communicate with hole 68. A recess surrounds hole 70 adjacent right face 24 to accommodate an O-ring 71, by which the joint between body main part 21 and end cap 22 may be sealed.

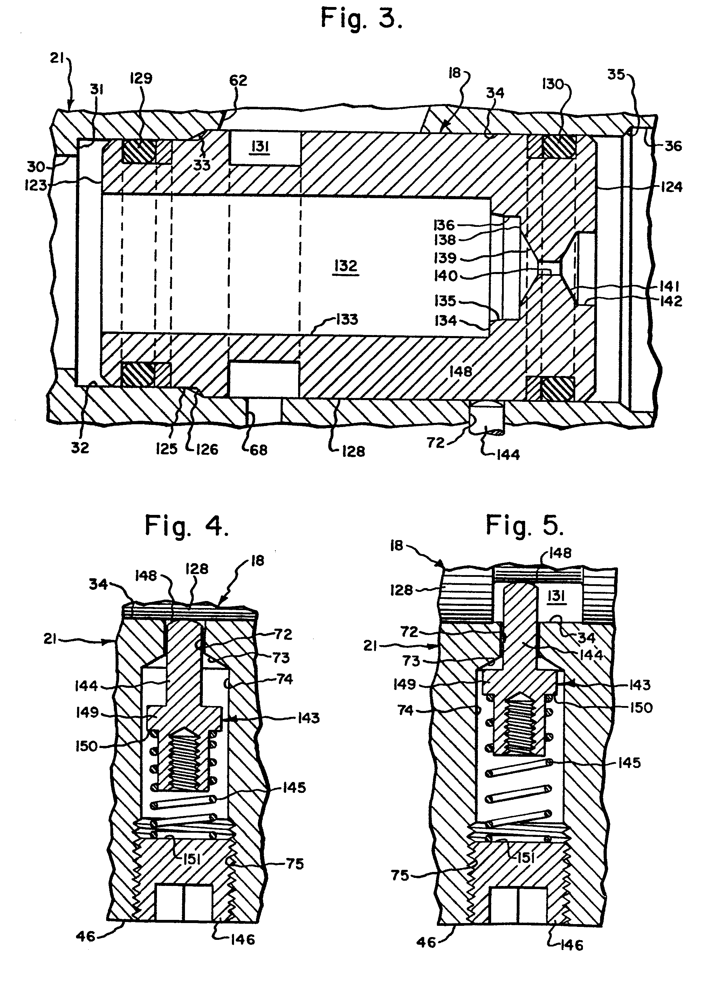

Still another stepped through-hole is provided in the body so as to communicate body surfaces 46, 34, and to receive the detent hereinafter described. As best shown in Fig. 4, this hole is bounded by (from top to bottom in Fig. 4): a cylindrical surface 72 depending from bore surface 34, a downwardly- and inwardly-facing frusto-conical surface 73, a cylindrical surface 74, and an internally-threaded portion 75 continuing vertically downwardly therefrom to open onto body bottom surface 46.

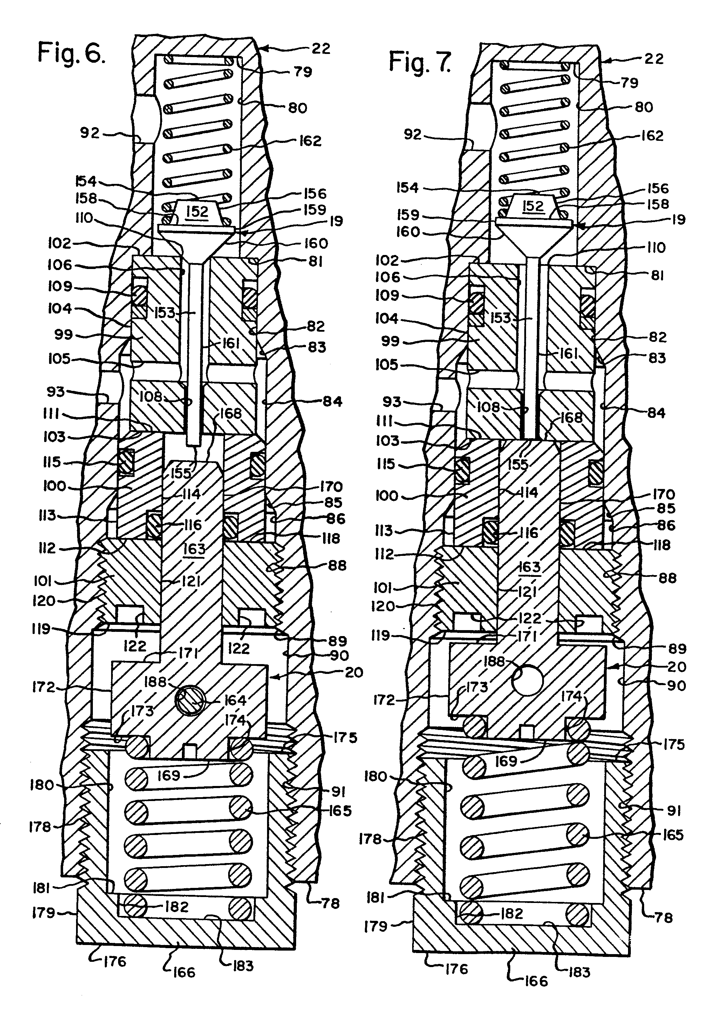

The end cap 22 is a substantially-rectangular somewhat plate-like member having a planar vertical left face 76 abutting the right face 24 of body part 21; having a planar vertical right face 77; and having a periphery including, in pertinent part, a downwardly-facing planar horizontal surface 78. A stepped blind hole extends upwardly into the end cap from its bottom surface 78. As best shown in Fig. 6, this hole includes (from top to bottom): a downwardly-facing circular horizontal surface 79, a cylindrical surface 80 depending therefrom, a downwardly-facing annular horizontal surface 81, a cylindrical surface 82, a downwardly- and inwardly-facing frusto-conical surface 83, a cylindrical surface 84, a downwardly- and inwardly-facing frusto-conical surface 85, a cylindrical surface 86, an internally-threaded portion 88, a downwardly- and inwardly-inclined frusto-conical surface 89, a cylindrical surface 90, and an internally-threaded portion 91 continuing vertically downwardly therefrom to open onto end cap bottom surface 78. As best shown in Fig. 1, a horizontal hole 92 extends between the end cap left face 76 and hole surface 80. Hole 92 is axially aligned with the body main part through-bore. Another horizontal hole 93 extends between the end cap left face 76 and hole surface 84. Hole 93 is aligned with body main part hole 70. As is readily apparent from Figs. 1 and 2, four bolt-like fasteners, severally indicated at 94, have their shank portions (not shown) passed through suitable holes (not shown) provided through the end cap, and have their threaded marginal end portions (not shown) matingly received in tapped holes (not shown) provided in the body main part. Thus, fasteners 94,94,94,94 may be tightened to draw the body main and the end cap together, compressing O-rings 40,71 therebetween.

Thus, the assembled body has a fluid inlet 95 (at the intersection of surfaces 23,25, has an outlet 61,61', and has a passageway extending therebetween. This passageway includes a main portion (bounded by surfaces 25-39), generally indicated at 96, within the body main part, which communicates inlet 95 with outlet 61,61'. The passageway also has a pilot portion (92, 80-84, 93, 70, 68, 131 and 62-66), generally indicated at 98, which communicates the passageway main portion and the outlet.

Referring now to Figs. 6 and 7, a subassembly, including block 99, spacer 100 and retaining ring 101, is arranged in the end cap stepped hole. Block 99 is a vertically-elongated cylindrical member having an annular horizontal upper face 102, the outer margin of which engages end cap surface 81, an annular horizontal lower face 103, and a cylindrical side wall surface 104. The upper portion of surface 104 closely faces end cap surface 82, while the lower portion thereof is spaced from end cap surfaces 83,84 to permit flow therebetween. A diametrical hole 105 extends horizontally through block 99. An axial hole 106 is drilled downwardly into the block from its upper face 102 to intersect hole 105. Another axial hole 108, albeit of reduced diameter, is drilled upwardly into the block from its lower face to intersect hole 105. An annular recess extends into the block from an upper portion of its sidewall surface 104 to accommodate an O-ring 109, which is compressed against end cap surface 82, and a backup ring. The intersection of end cap surfaces 102, 106 forms an annular seat, indicated at 110, for a purpose hereinafter explained.

The spacer 100 is a tubular member having an annular horizontal upper

face 111 engaging block lower face 103; having an annular horizontal lower face 112; having an outer cylindrical surface 113, the upper portion of which closely faces end cap surface 84; and having an inner cylindrical surface 114. One annular recess extends into the spacer from its outer surface 113 to accommodate an O-ring 115, which engages end cap surface 84. Another annular recess extends into the spacer from its inner surface 114 to accommodate an O-ring 116, which engages the plunger.

The retaining ring 101 is also a tubular member having an annular horizontal upper face 118 engaging spacer lower face 112; an annular horizontal lower face 119, an externally-threaded side surface 120 in mating engagement with end cap threaded surface 88; and a vertical through-bore, bounded by cylindrical surface 121, which is aligned with spacer bore surface 114. A plurality of blind holes, severally indicated at 122, extend upwardly into the retaining ring from its lower face 119 to receive insertion of a suitable turning tool (not shown), by which the retaining ring 101 may be selectively rotated relative to end cap 22. Retaining ring 101 functions to hold spacer 100 and block 99 in their illustrated fixed positions relative to end cap 22 and to each other.

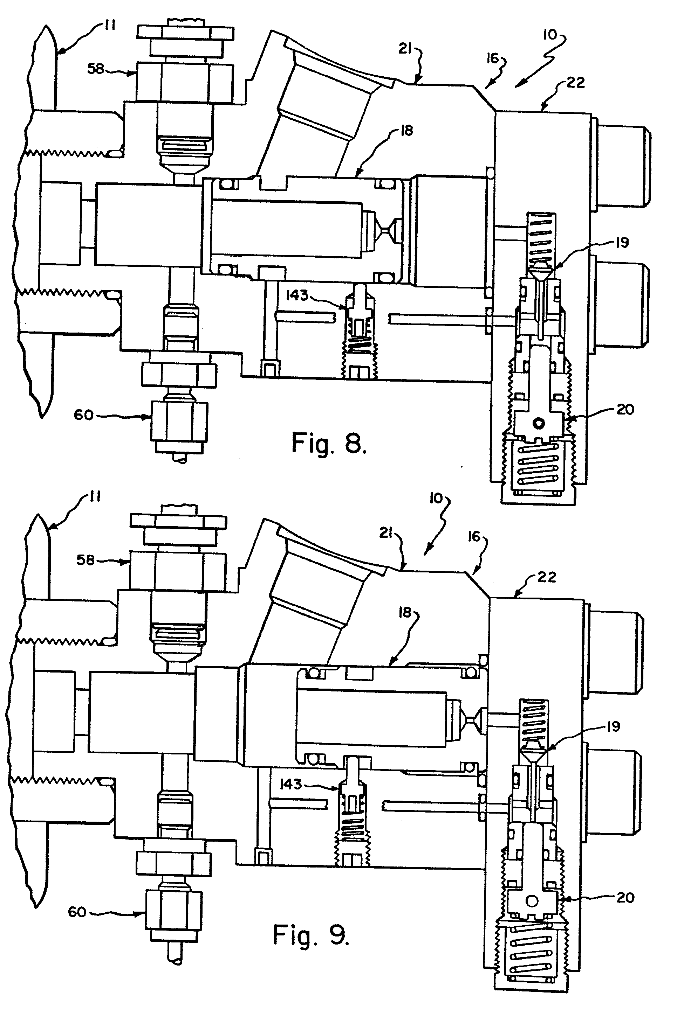

Referring now to Fig. 3, the movable member 18 somewhat resembles a piston, but is provided with an opening 140 therethrough for permitting fluid pressure to equalize on either side thereof. Specifically, member 18 has an annular vertical left face 123, the outer margin of which is chamfered; an annular vertical right face 124, the outer margin of which is also chamfered; and an outer surface which sequentially includes (from left to right) a cylindrical surface 125 extending rightwardly from left end face 123, an outwardly- and leftwardly-facing frusto-conical surface 126, and a cylindrical surface 128 continuing rightwardly therefrom to join end face 124. An annular recess extends into piston-like member 118 from surface 125, adjacent left face 123, to accommodate an O-ring 129, which normally engages body surface 32, and a back-up ring. Another annular recess extends into member 118 from surface 128, adjacent right end face 124, to accommodate another O-ring 130, which normally engages body surface 34. A third annular recess 131 extends into member 118 from surface 128, adjacent frusto- conical surface 126, and communicates hole 68 with outlets 61,61' when the member is in the position shown in Fig. 3. The body through-opening, generally indicated at 132, is sequentially bounded by (from left to right in Fig. 3): a cylindrical surface 133 extending rightwardly from left end face 123, a leftwardly-facing annular vertical surface 134, a leftwardly- and inwardly-facing frusto-conical surface 135, a cylindrical surface 136, a leftwardly-facing annular vertical surface 138, a leftwardly- and inwardly-facing frusto-conical surface 139, a cylindrical surface 140 of narrowed diameter, a rightwardly- and inwardly-facing frusto-conical surface 141, and a cylindrical surface 142 continuing rightwardly therefrom to join right face 124. Thus, surfaces 139-140 form a venturi-like flow-restrictive orifice, with surface 139 defining the entrance section, surface 140 defining the narrowed throat section, and surface 141 defining the exit section. Thus, the opening 132 through member 18 permits fluid to flow through the member such that the pressure applied to the opposite end faces thereof will equalize over a period of time. It should be noted that fluid in the annular space between body surface 33 and member surfaces 125,126 is permitted to communicate with the outlet between body surface 34 and member surface 128. It should also be noted that the projected cross-sectional area of the member right end face is greater than that of the member left end face. The pressure in the passageway main portion to the right member 18 acts on the net or differential area between the member end faces to urge the piston leftwardly to the "first position" shown in Figs. 1, 3 and 8, at which the presence of member 18 obstructs or prevents fluid flow from the inlet 95 to the outlet 61,61' directly through the passageway main portion, this being the shortest path therebetween. In other words, when member 18 is in the "first position" shown in Figs. 1, 3 and 8, fluid passes through the member opening 132 to enter the passageway pilot portion. It should also be noted that while the narrowed throat of the member opening will permit a relatively-low flow of fluid through the member, it is a restrictive orifice which is resistive to a relatively-large dynamic flow therethrough, as created when the passageway pilot portion has been opened and communicates with the outlet. The orifice or throat 140 is so configured and dimensioned that the flow through the pilot passageway to the outlet will be greater than the replenishing flow passing through the restricted orifice. The effect of this will be to create a pressure differential across member 18, which will cause the member to move from the "first position" shown in Figs. 1, 3 and 8 to the "second position" shown in Fig. 9, when the pilot valve 19 has been opened. To prevent the member from bouncing back to the "first position", the improved valve is provided with a detent, generally indicated at 143 (Figs. 1, 4 and 5), to retain and hold member 18 in the "second position".

Referring now to Figs. 4 and 5, the detent 143 includes a follower 144, a spring 145, and a retaining cap 146. The follower has, in pertinent part, a rounded or convex nose 148 at the uppermost end of a stem, which issues from an enlarged portion 149 having a downwardly-facing annular horizontal surface 150. When the piston member is in the "first position" (Fig. 4), the nose 148 slidably engages member surface 128, with the stem portion being guided by body surface 72. The retaining cap 146 is threaded into the lower marginal end portion of tapped hole 75, to compress spring 145. The upper marginal end portion of this spring engages follower surface 150, and the lower marginal end portion thereof engages the upper face 151 of the retaining cap, thereby to continuously bias the follower to move upwardly against member surface 128. However, when the member has been moved from the "first position" (Fig. 8) to the "second position" (Fig. 9), the detent nose will snap upwardly into body recess 131, as shown in Figs. 5 and 9, thereby restraining and holding the member from returning to the "first position". Thus, the "second position" of the member is that at which the detent nose 148 is received in the piston member recess. The follower 144 is also shown as being provided with a blind tapped hole which extends upwardly into the follower from its lowermost face, to receive and accommodate a suitable tapped rod (not shown) by which the follower may be pulled out of engagement with the member recess 131, as when resetting the valve.

Adverting now to Figs. 6 and 7, the pilot valve element 19 is arranged in the end cap recess to normally close the pilot passageway. Element 19 is shown as being a specially-configured member having a head portion 152 and a stem portion 153 depending vertically therefrom. Specifically, this element has a circular horizontal upper face 154; a circular horizontal lower face 155 at the lowermost distal end of the stem portion; and an outer surface which sequentially includes (from top to bottom) an upwardly- and outwardly-facing frusto-conical surface 156 depending from the upper face, an upwardly-facing annular horizontal surface 158, a cylindrical surface 159, a downwardly- and outwardly-facing frusto-conical surface 160, and a cylindrical surface 161 about the stem portion continuing downwardly therefrom to join lower end face 155. A coil spring 162 acts between body surface 79 and element surface 158, to continuously urge the element downwardly such that element surface 160 will normally sealingly engage seat 110, thereby closing the passageway pilot portion.

Actuator 20 is shown as including a plunger 163, a release pin 164, a spring 165, and an end cap 166.

0188048

Plunger 163 has a rod-like portion extending upwardly from a radially-enlarged portion. Specifically, plunger 163 has a horizontal circular upper end face 168; a horizontal circular lower end face 169; and an outer surface which sequentially includes (from top to bottom in Figs. 6 and 7) a cylindrical surface 170 extending downwardly from upper face 168 and guided by aligned body surfaces 114, 121, and upwardly-facing annular horizontal surface 171, a cylindrical surface 172, a downwardly-facing annular horizontal surface 173, and a cylindrical surface 174 continuing downwardly therefrom to join lower end face 169.

The end cap 166 is a somewhat cup-shaped member having an annular horizontal upper face 175; a circular horizontal lower face 176; an outer surface which sequentially includes an externally-threaded portion 178 extending downwardly from upper face 175, and a cylindrical surface 179 continuing downwardly therefrom to join lower face 176; and an inner surface which includes a cylindrical surface 180 depending from upper face 175, a upwardly-facing annular horizontal surface 181, and a cylindrical surface 182 continuing downwardly therefrom to join the upwardly-facing circular bottom surface 183. Spring 165 is compressed between plunger surface 173 and end cap surface 183, and continuously urges the plunger to move upwardly relative to the body. However, the plunger is normally held in a "cocked" position, as shown in Fig. 6, by means of the retaining or release pin 164 mounted on the distal end of a lanyard 185 (Fig. 2), and having its marginal end portion received in a body blind hole 186, having an intermediate portion passed through a hole 188 provided in the plunger, and having a rearward portion passed through a body hole 189. The lanyard is shown encased in a protective sheath 190, and may be pulled either manually or mechanically. When pin 164 has been pulled out of aligned holes 186, 188, 189, the compressed spring drives the plunger upwardly to engage the element lower end face 155 and to displace the element upwardly relative to the body, by overcoming the opposing forces exerted on the element. This causes element surface 160 to separate from seat 110, thereby permitting flow through the passageway pilot portion to the outlet.

The operation of the valve will now be described with reference to 8 and 9, in which the various parts heretofore described appear in outline form only. It is assumed that the valve is mounted on a "bottle", as shown, such that the inlet 95 communicates with a source of high-pressure fluid.

Assume that the various parts are initially in the position shown in Fig. 8. Specifically the member is in the "first position", blocking direct communication between the inlet and the outlet; the valve element 19 closes the passageway pilot portion; and the plunger is held in its "cocked" position by the retaining pin. Since the passageway pilot portion has been closed, there will be no flow through the member opening 132 after the pressures have equalized on opposite sides of the piston member. As previously noted, such equalized pressures will act on a net differential area to continuously urge the member to move leftwardly against the body, this being the "first position" of the member shown in Figs. 1 and 8. It should also be noted that while the pressure above pilot element 20 is at the inlet pressure, the downstream portion of the pilot passageway is at the outlet pressure. Hence, a large pressure differential will exist across the pilot element. Thus, when the various parts are in the condition shown in Fig. 8, member 18 blocks direct fluid communication between the inlet and outlet through the passageway main portion, and the pilot element prevents indirect communication between the inlet and outlet through the passageway pilot portion.

However, if the release pin is now pulled, spring 165 will extend to drive the plunger upwardly and to displace valve element 19 off seat 110, by overcoming the opposing forces of spring 162 and the fluidic force attributable to the differential pressure across element 19. When the pilot valve has been opened, fluid may flow from the chamber to the right of member 118 through the pilot passageway through the outlet. The effect of this is to rapidly create a large pressure differential across piston member 18, which causes it to move rightwardly. This motion is facilitated by the restricted orifice 140, which prevents the pressure to the right of piston member 18 from dynamically equalizing with the inlet pressure. In other words, the flow through the restricted orifice is such as to prevent the quick pressure drop to the right of member 18 from being immediately and simultaneously restored. Thus, when pilot valve 119 has been opened, the pressure differential across member 18 will drive it rightwardly from the "first position" shown in Fig. 8 to the "second position" shown in Fig. 9. Such movement of the piston member thereafter permits flow from the inlet to the outlet directly through the passageway main portion. Since the diameter of the passageway main portion, even at its most narrowed surface, is substantially greater than that of passageway pilot portion, the flow (i.e., volume/second) through the valve will be substantially greater after the member has been moved to its "second position".

The valve may be used for rapidly inflating a device with fluid from a pressurized source.

Many changes and modifications may be made to the valve des-cribed above. For example, the materials of construction, and the sizes and shapes of the various component parts, may be readily altered, as desired. The valve may have one or more inlets, and one or more outlets. Other types of springs or resilient members may be substituted for those shown, or, in some cases, entirely omitted if a differential pressure will perform the equivalent function. For example, spring 162 might in some cases be omitted, and the differential pressure across the element used to hold the element in a normally-closed position. Other types of actuators and release mechanisms may be readily substituted for those shown. Also, the member may be biased leftwardly by an optional spring, as desired. As previously noted, the pressure fitting and the fill fitting are optional. The release mechanism may be operated either manually or automatically.

Therefore, while the presently-preferred embodiment of the improved valve has been shown and described, and some contemplated modifications thereof discussed, persons skilled in this art will readily appreciate that various additional changes may be made without departing from the scope of the invention.

## CLAIMS

1.    A valve (10) for controlling the supply of fluid from a pressurized fluid source (11), comprising a body (16) having a main passageway (96,62) therethrough which connects an inlet (25), adapted for connection to the fluid source (11), and an outlet (66);   a movable member (18) mounted in said main passageway (96) for sealed sliding movement therealong,  said member (18) being  movable between a  first  position  (Fig.8) preventing  fluid flow from the inlet (25) through  the main  passageway (96) to the outlet (66),  and a second position (Fig.9) permitting said fluid flow;   and ·characterized  in that the movable member (18)  has  an opening (132,140) therethrough for  permitting  fluid pressure  to  equalize at opposite ends of  the  member (18);   in   that  the  body  has  a  pilot  passageway (92,93,70,68) connecting a portion (34-36) of the  main passageway  to the outlet (66);   in that a pilot  valve (19) is mounted in the pilot passageway and biased into a  closed  position which closes the pilot  passageway; and in that an actuator (20),  mounted in the body,  is operable  to  open  the pilot valve (19)  to  allow  a secondary fluid flow through the pilot passageway;   the arrangement  being such that said secondary fluid  flow causes  said movable member (18) to move to its  second position.

2.     A valve according to claim 1, wherein the pilot passageway (92,93,70,68) connects a portion (30) of the main passage-way (96,62) upstream of the movable member (18) to another portion (62) of the main passageway, downstream of the movable member (18), by way of the opening (132,140) through the movable member (18).

3.     A valve according to claim 1 or 2, wherein the pilot valve (19) comprises a valve member biased into sealing engagement with an annular seat (11) through the centre of which passes the secondary fluid flow.

4.     A valve according to any preceding claim, wherein said member opening (132,140) has a flow restriction (140) therein.

5.     A valve according to any preceding claim, wherein the main passageway comprises three portions (30,62,36) connected respectively to the inlet, the outlet and the pilot passageway, the movable member sliding in the first (30) and third (36) portions selectively to obstruct the second portion (62).

6.     A valve according to claim 5, wherein the cross-sectional area of an end face of the movable member in the third portion (36) is greater than that of the opposite end face in the first portion (30), thereby causing the fluid pressure to urge the movable member (18) towards its first position (Fig.8).

7.    A valve according to any preceding claim, a detent (143) mounted on said body (16) and operative to prevent said movable member (18) from returning toward its first position when it has moved to its second position.

8.    A valve according to any preceding claim, wherein said pilot passageway communicates with said outlet (66) both when said movable member (18) is in its first position (Fig.8) and when it is in its second position (Fig.9).

9.    A valve according to any preceding claim, wherein the cross-sectional area of the main passageway (96) is substantially greater than the cross-sectional area of the pilot passageway (92,70,68).

10.    A valve according to claim 3 or any claim appendant thereto, wherein said actuator (20) includes a plunger (163) movable toward and away from said valve member (19), a spring (165) for biasing said plunger (163) to move toward said valve member (19) to displace said member (19) off said seat (110), and a holding device (164) for normally holding said plunger (163) away from said member (19), but selectively operable to release said plunger (163); whereby, after said holding device has been operated, the spring will cause said plunger to move said valve member (19) off said seat (11) for permitting fluid flow through said pilot passageway.

Fig. 1.

Fig. 2.

1/4

0188048

**Fig. 3.**

**Fig. 4.**

**Fig. 5.**

0188048

Fig. 6.

Fig. 7.

Fig. 8.

Fig. 9.

European Patent Office

**EUROPEAN SEARCH REPORT**

| | DOCUMENTS CONSIDERED TO BE RELEVANT | | EP 85301269.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | GB - A - 1 297 541 (R. BOSCH GMBH)<br>* Totality * | 1-4,9 | F 16 K 17/10<br>F 16 K 31/124 |
| A | EP - A1 - 0 117 208 (GLAUDE BOUVERET)<br>* Totality * | 1-4,9 | |
| A | DE - A1 - 3 300 453 (GEBR. SULZER AG)<br>* Abstract; fig. 1,2 * | 1-4,9 | |

| | TECHNICAL FIELDS SEARCHED (Int. Cl.4) |
|---|---|
| | F 16 K 17/00 |
| | F 16 K 31/00 |
| | F 15 B 11/00 |
| | F 15 B 13/00 |
| | G 05 D 7/00 |
| | G 05 D 16/00 |

The present search report has been drawn up for all claims

| Place of search | Date of completion of the search | Examiner |
|---|---|---|
| VIENNA | 08-04-1986 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82